# EUROPÄISCHE PATENTSCHRIFT

(11) **EP 0 951 967 B1**
(45) Veröffentlichungstag und Bekanntmachung des Hinweises auf die Patenterteilung: **24.07.2002**
(21) Anmeldenummer: 98107582.3
(22) Anmeldetag: 25.04.1998
(51) Int. Cl.: B25J 9/16, G01B 21/04, G01B 11/30

(54) **Messvorrichtung zum Messen der Positionier- und Bahngenauigkeit eines bewegten Maschinenteils**
Test gauge for measuring the positional and track precisionof a moving machine part
Dispositif pour déterminer la précision de la position sur une voie des éléments mobiles de machine

(43) Veröffentlichungstag der Anmeldung: 27.10.1999
(73) Patentinhaber: INSTITUT FÜR FERTIGUNGSTECHNIK DER TU GRAZ, 8010 Graz (AT)
(72) Erfinder: Kovac, Igor Dipl.-Ing., 1235 Radomlje (SI)

(56) Entgegenhaltungen:
- EP-A- 0 729 005
- WO-A-88/06271
- DE-C- 4 313 318
- US-A- 5 533 271
- SCHUSSLER H -H: "NEUE MOGLICHKEITEN DES LASER-EINSATZES IN DER INDUSTRIELLEN MESSTECHNIK" MESSEN UND UEBERWACHEN, April 1989 (1989-04), Seiten 4-14, XP000040184

## Beschreibung

Die Erfindung betrifft eine Meßvorrichtung gemäß dem Oberbegriff des Patentanspruches 1.

Mit der fortschreitenden Umsetzung der rechnerintegrierten Fertigung gewinnt die Vermessung von Industrierobotern zunehmend an Bedeutung. Die in der Praxis gegebenen Anforderungen an die Positionier- und Bahngenauigkeit werden in der Regel ohne vorherige Vermessung und Kalibrierung jedes einzelnen Roboterexemplares nicht erreicht.

Ein roboterähnlicher Aufbau mit mehreren rotatorischen Achsen wird heute auch vermehrt als Meßmaschine eingesetzt. Eine derartige Meßmaschine kann wie eine normale Koordinaten-Meßmaschine zur Vermessung von Werkstücken eingesetzt werden. Besonders vorteilhaft kann sie aber zur Vermessung und Kalibrierung von Industrierobotern verwendet werden, wie beispielsweise in der EP 0 615 110 B1 und der EP 0 533 949 A1 ausgeführt. Auch derartige roboterähnliche Meßmaschinen müssen in der Regel vor ihrem Einsatz vermessen und kalibriert werden.

Eine Meßvorrichtung zum Messen der Positionier- und Bahngenauigkeit einer Maschine gemäß den Merkmalen des Oberbegriffs des Anspruches 1 ist in dem Artikel: Neue Möglichkeiten des Laser-Einsatzes in der industriellen Meßtechnik; Messen und Überwachen; April 1989; Seiten 4-14 beschrieben. In Bild 6 ist eine Meßvorrichtung dargestellt, mit der eine fortlaufende laserinterferometrische Verschiebemessung möglich ist. Diese Anordnung kann raumschräg auf einem Gerätetisch aufgebracht werden und bildet eine Meßlinie. Ein Hilfsschlitten wird motorisch in verschiedene Positionen entlang der Meßlinie verschoben. Er enthält Meßflächen, an denen eine Antastung mit einem Taster der zu prüfenden Maschine erfolgt.

Diese Anordnung hat den Nachteil, daß bei der Messung die Antastfehler mit einfließen. Diese Antastfehler beruhen auf der richtungsabhängigen Antastcharakteristik derartiger Tastköpfe sowie auf geschwindigkeits-abhängigen Meßergebnissen der Antastung. Problematisch ist darüber hinaus insbesondere die reproduzierbare Vermessung von Maschinen in Knickarmbauweise, bei denen das bewegte Maschinenbauteil in Form eines Endeffektors seine Orientierung ändern kann. Beim Antastvorgang kann aufgrund der Fläche - Kugel Berührung der Endeffektor beliebig orientiert sein, diesbezüglich ist somit keine reproduzierbare Erfassung möglich.

Eine weitere Meßvorrichtung zum Messen der Positionier- und Bahngenauigkeit eines Roboters ist in der DE 37 10 068 C2 beschrieben. Die Positioniergenauigkeit einer Werkzeugaufnahme (Endeffektor) des Roboters wird berührungslos mit einem Laser-Fluchtungsmeßgerät gemessen. Bestandteile dieser Meßvorrichtung sind ein Laserinterferometer, ein optischer Meßkopf mit positionsempfindlichen Detektoren und eine Auswerteeinheit. Der optische Meßkopf wird an der Werkzeugaufnahme des Roboters oder einer Werkzeugmaschine befestigt. Die Geradheit des aus dem Interferometer austretenden Laserstrahls wird als Referenz benutzt. Zur Messung wird der Meßkopf entlang dieses Laserstrahls bewegt. Dabei erfaßt die Meßvorrichtung kinematische Kenngrößen sowie geometrische Kenngrößen. Es werden Abweichungen der vorgegebenen Bahn entlang des Laserstrahls mittels des Interferometers und quer dazu mittels der positionsempfindlichen Detektoren gemessen. Ein Prozeßrechner übernimmt die gemessenen Werte und berechnet daraus roboterspezifische Kenngrößen.

Der Nachteil dieser Meßvorrichtung ist, daß diese Kenngrößen für viele Anwendungen nicht präzise genug gemessen werden können. Weiterhin erfordert diese Meßvorrichtung einen Antrieb des zu prüfenden Maschinenteils. Eine automatische Vermessung von Meßmaschinen ohne eigenen Antrieb ist somit nicht möglich.
Aufgabe der Erfindung ist es, eine Meßvorrichtung zum Messen der Positionierund Bahngenauigkeit eines bewegten Maschinenteils anzugeben, die flexibel einsetzbar ist, eine hohe Meßgenauigkeit aufweist und mit der auch Meßmaschinen ohne eigenen Antrieb auf einfache Weise geprüft und kalibriert werden können.

Gelöst wird diese Aufgabe von einer Meßvorrichtung mit den Merkmalen des Patentanspruches 1.

Vorteilhafte Ausgestaltungen entnimmt man den abhängigen Patentansprüchen.

Die Vorteile der erfindungsgemäßen Vorrichtung liegen darin, daß sie zur Vermessung und Kalibrierung von Industrierobotern sowie von handgeführten, insbesondere von roboterähnlichen Meßmaschinen eingesetzt werden kann, wobei eine Automatisierung des Meß- und Kalibrierverfahrens ermöglicht wird. Mit der Meßvorrichtung ist die Positionier- und Bahngenauigkeit bei konstanter Orientierung und insbesondere die Wiederholgenauigkeit hochgenau erfaßbar, da das zu prüfende bewegte Maschinenteil durch die Meßvorrichtung selbst entlang der Meßstrecke starr geführt wird. Eine Änderung der Orientierung kann dabei nicht bzw. nur in vernachlässigbarem Umfang auftreten.

Mit Hilfe der Zeichnungen wird die Erfindung näher erläutert.

Es zeigt
- Figur 1: eine schematische Ansicht der Meßvorrichtung,
- Figur 2: ein Detail der Linearführung der Meßvorrichtung,
- Figur 3: einen Schnitt der Linearführung und
- Figur 4: die Linearführung in Seitenansicht.

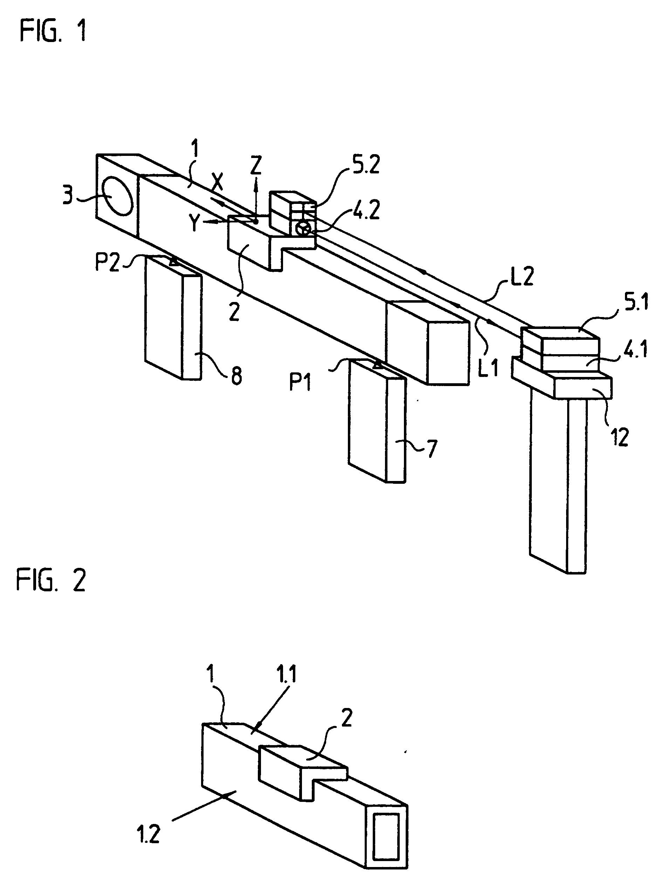

In Figur 1 ist das Prinzip der Meßvorrichtung schematisch dargestellt. Die Haupt-Komponenten der mobilen Meßvorrichtung sind eine steife Linearführung 1, ein Schlitten 2, ein Antrieb 3 des Schlittens 2, eine Längenmeßeinrichtung 4 und ein Laser-Fluchtungsmeßgerät 5.

Die Linearführung 1 ist vorzugsweise ein Keramikprofil, wie im Schnitt in Figur 2 dargestellt. Der Schlitten 2 ist an den Flächen 1.1 und 1.2 der Linearführung 1 über Luftlager, insbesondere über vorgespannte Luftlager geführt. Die Geradheit der Führungsflächen 1.1 und 1.2 ist präzise gefertigt, so daß die Linearführung 1 eine hochgenaue Referenz-Gerade bildet, entlang welcher der Schlitten 2 geführt wird. Die Linearführung 1 und die Luftlager sind so gestaltet, daß Winkelabweichungen des Schlittens 2 aufgrund der Elastizität kleiner sind als die verlangten Daten bezüglich der Konstanz der Orientierung.

Die Längenmeßeinrichtung 4 dient zum Messen der Position des Schlittens 2 entlang der Linearführung 1 (X-Richtung) und das Laser-Fluchtungsmeßgerät 5 zur Erfassung von Querabweichungen des Schlittens 2 (Y- und Z-Richtung).

Die Längenmeßeinrichtung ist ein Laserinterferometer 4 mit einem stationären Meßkopf 4.1 und einem Tripelreflektor 4.2. Der Meßkopf 4.1 ist unabhängig von der Linearführung 1 aufgestellt und der Laserstrahl L1 des Meßkopfes 4.1 wirkt in bekannter Weise mit dem am Schlitten 2 befestigten Tripelreflektor 4.2 zusammen. Mit dem Laserinterferometer 4 kann die Lage des Schlittens 2 in X-Richtung, also entlang der Linearführung 1 hochgenau gemessen werden.

In nicht gezeigter Weise kann anstelle des Interferometers 4 auch eine andere Längenmeßeinrichtung Verwendung finden. Besonders vorteilhaft ist ein absoluter oder inkrementaler Maßstab, der an der Linearführung 1 befestigt ist und von einem am Schlitten 2 befestigten Abtastkopf abgetastet wird.

Zur Messung von Querabweichungen des Schlittens 2 wird das Laser-Fluchtungsmeßgerät 5 verwendet. Es besteht in bekannter Weise aus einem stationären Laser 5.1, welcher einen Laserstrahl L2 auf zumindest einen positionsempfindlichen Detektor 5.2 des Schlittens 2 aussendet. Ein derartiges Laser-Fluchtungsmeßgerät ist in der DE 37 10 068 C2 beschrieben, weshalb sich weitere Erläuterungen erübrigen.

In nicht gezeigter Weise kann auch ein Laser-Fluchtungsmeßgerät eingesetzt werden, bei dem der Laser 5.1 sowie der positionsempfindliche Detektor 5.2 gemeinsam stationär angeordnet sind. Zur Umlenkung des Laserstrahls L2 ist dabei am Schlitten 2 ausschließlich eine spezielle Umlenkoptik angeordnet. Ein derartiges Laser-Fluchtungsmeßgerät ist in der DE 43 13 318 C1 beschrieben, weshalb sich weitere Erläuterungen erübrigen.

Die stationäre Komponente 5.1 des Laser-Fluchtungsmeßgeräts ist in der gezeigten besonders vorteilhaften Ausführung unabhängig von der Linearführung 1 aufgestellt. Dies hat den Vorteil, daß Abweichungen in den zwei Richtungen Y, Z hochgenau gemessen werden können, welche insbesondere durch äußere Kräfte und Momente verursacht werden. Diese Kräfte können nämlich auch eine Verschiebung der Linearführung 1 selbst verursachen. Versuche haben gezeigt, daß dabei Verschiebungen in Y- und Z-Richtung auftreten, die nicht zu vernachlässigen sind, dagegen sind Verschiebungen der Linearführung 1 in X-Richtung vernachlässigbar klein. Aus diesem Grund kann ein Maßstab zur Messung der Schlittenposition in X-Richtung alternativ auch direkt an der Linearführung 1 befestigt werden.

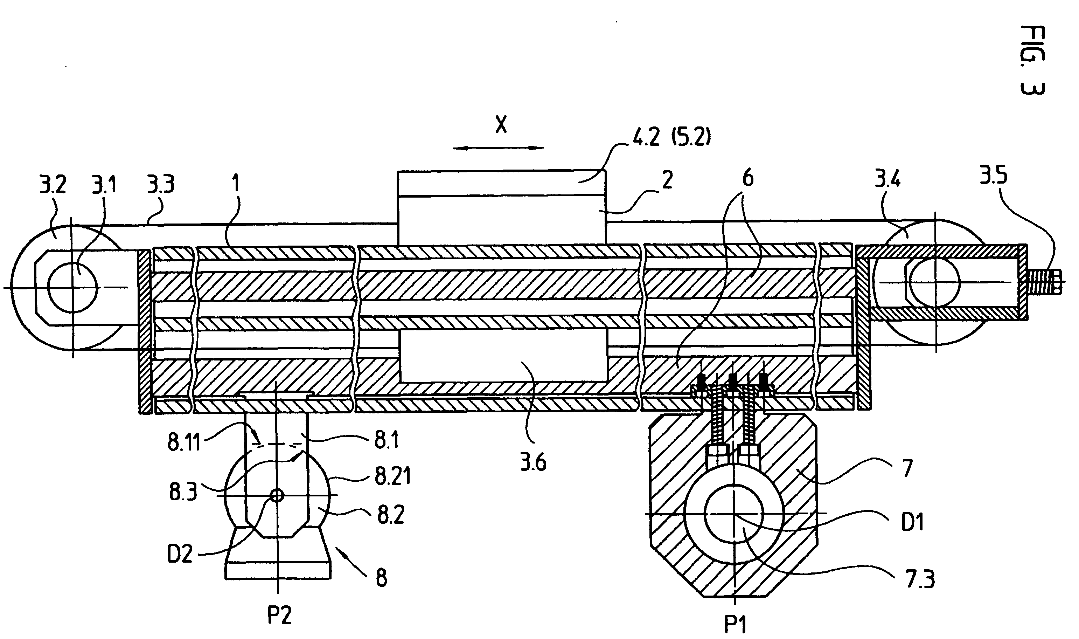

In Figur 3 ist der konstruktive Aufbau der Linearführung 1 im Schnitt im Detail dargestellt. Wie bereits erläutert, und in Figur 2 gezeigt, besteht die Linearführung 1 aus einem hohlen Profilkörper, wobei der Schlitten 2 an zwei senkrecht zueinander verlaufenden Flächen 1.1 und 1.2 des Profils geführt wird.

Der Schlitten 2 wird über den Antrieb 3 entlang der Linearführung 1 bewegt. Der Antrieb 3 besteht aus einem Motor 3.1, welcher eine Antriebsrolle 3.2 antreibt. Die Antriebsrolle 3.2 treibt wiederum ein Stahlband 3.3 an, das als Endlosband über eine zweite Rolle 3.4 umgelenkt ist. Am Stahlband 3.3 ist der Schlitten 2 starr befestigt. Zur Spannung des Stahlbandes 3.3 ist die Rolle 3.4 mittels einer Feder 3.5 in Längsrichtung der Linearführung 1 vorgespannt. Zum Gewichtsausgleich ist am Stahlband 3.3 gegenüber des Schlittens 2 ein Ausgleichsgewicht 3.6 befestigt.

Anstelle des dargestellten Antriebs 3 kann auch eine andere Anordnung, beispielsweise ein Linearmotor eingesetzt werden.

Die gesamten Komponenten 3.1 bis 3.6 des Antriebs 3 sind an einem separaten Träger 6 befestigt. Um die Linearführung 1 durch die Komponenten 3.1 bis 3.6 des Antriebs 3 möglichst wenig zu verformen, ist der Träger 6 im Hohlraum der Linearführung 1 angeordnet und stützt sich ausschließlich an den zwei Bessel-Punkten P1, P2 der Linearführung 1 ab. An einem dieser Bessel-Punkte P1 erfolgt eine starre Verbindung zwischen dem Träger 6 und der Linearführung 1 bzw. einem Montageelement 7, und am anderen Bessel-Punkt P2 ist nur eine Auflage an der Linearführung 1 bzw. einem Montageelement 8 in Form eines Linearlagers vorgesehen, so daß eine Verschiebung (Ausgleichsbewegung) in Längsrichtung X zwischen Träger 6 und Linearführung 1 ermöglicht wird. Diese Möglichkeit der Verschiebung ist erforderlich, damit bei Temperaturänderungen keine Zwangskräfte durch unterschiedliche Ausdehnungen auf die Linearführung 1 wirken.

Das Ausgleichsgewicht 3.6 ist in Längsrichtung X der Linearführung 1 am Träger 6 geführt. Einen besonders stabilen und leichten Aufbau erhält man, wenn der Träger 6 aus mehreren Stäben besteht, an einem Stab sind an den Enden die Rollen 3.2 und 3.4 sowie der Motor 3.1 befestigt und an weiteren in Z-Richtung zum ersten Stab beabstandet angeordneten Stäben wird das Ausgleichsgewicht 3.6 geführt.

Damit die erfindungsgemäße Meßvorrichtung flexibel eingesetzt werden kann, sind an der Linearführung 1 Montageelemente 7 und 8 angebracht. Die Montageelemente 7, 8 unterstützen die Linearführung 1 wiederum ausschließlich an den Bessel-Punkten P1, P2. Das Montageelement 8 ist wiederum als in X-Richtung ausgleichendes Linearlager ausgeführt, indem ein an der Linearführung 1 starr befestigtes Teil 8.1 des Montageelementes 8 eine Gleitfläche 8.11 aufweist und ein dazu verschiebbares Teil 8.2 ebenfalls eine korrespondierende Gleitfläche 8.21 besitzt. Die Linearführung 1 kann über die Montageelemente 7 und 8 beispielsweise an einer stationären Basis, einem stationären Maschinenteil oder auch einem bewegten Maschinenteil aufgesetzt bzw. befestigt werden.

Im dargestellten Beispiel sind die Montageelemente 7, 8 speziell dazu ausgebildet, um die Linearführung 1 beliebig im Raum aufstellen zu können und Messungen entlang einer beliebig im Raum liegenden Referenz-Geraden zu ermöglichen. Die zur Unterstützung der Linearführung 1 dienenden Montageelemente 7 und 8 weisen hierzu jeweils ein Drehgelenk 7.3 und 8.3 mit Drehachsen D1, D2 auf. Das Drehgelenk 7.3 besteht aus einem in Y-Richtung verlaufenden Zapfen, welcher nach erfolgter Einstellung der gewünschten Neigung der Linearführung 1 klemmbar ist um eine Arretierung zu ermöglichen. Das Drehgelenk 8.3 wird durch das Zusammenwirken der ebenen Gleitfläche 8.11 mit einer kugelförmigen Gleitfläche 8.21 des Teils 8.2 gebildet, es kann aber auch ein separates Drehlager im Teil 8.2 sein. Durch in Figur 3 dargestellte weitere Unterstützungsteile 9, 10, welche am Teil 8.2 des Montageelementes 8 befestigt sind und durch ein Unterstützungsteil 11 am Montageelement 7 ist eine beliebige Schrägstellung der Linearführung 1 möglich.

Der stationäre Teil 5.1 des Laser-Fluchtungsmeßgeräts 5 sowie der Meßkopf 4.1 sind auf einen schwenkbaren und arretierbaren Halter 12 befestigt, damit die Laserstrahlen L1, L2 der X-Richtung entsprechend der Schrägstellung der Linearführung 1 nachgeführt werden können.

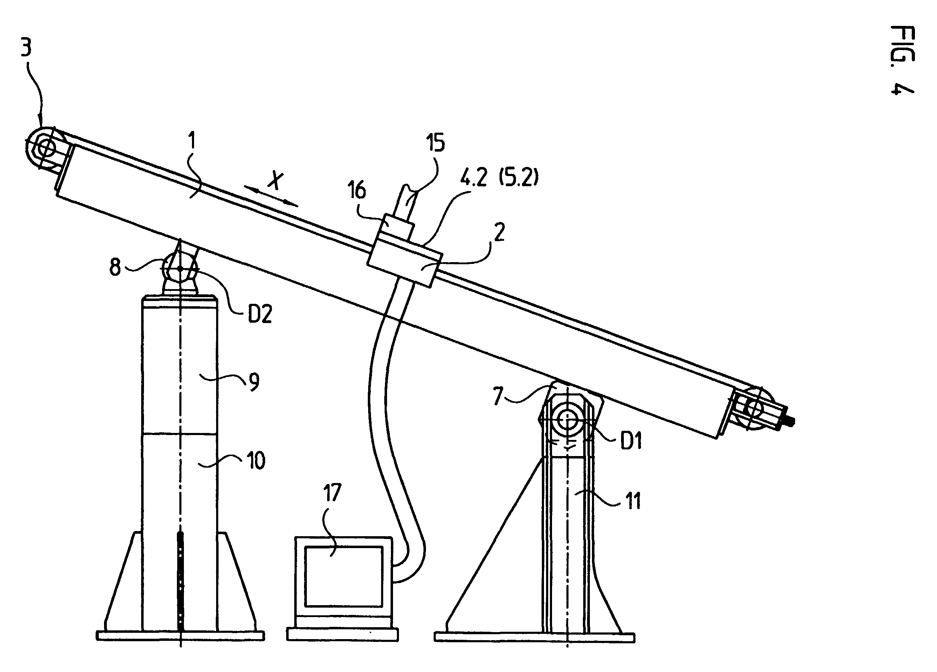

Zur Prüfung einer roboterähnlichen Koordinatenmeßmaschine oder eines Industrieroboters mit sechs Freiheitsgraden wird der Endeffektor 15 (Figur 4) starr mit dem Schlitten 2 gekoppelt, wozu am Schlitten 2 eine Aufnahme 16 vorgesehen ist.

Soll mit der erfindungsgemäßen Meßvorrichtung ein Roboter oder eine Meßmaschine mit weniger als sechs Freiheitsgraden geprüft werden, so können die zur Kopplung erforderlichen noch fehlenden Freiheitsgrade durch zusätzliche Führungen bzw. Gelenke oder Koppelmechanismen zwischen dem Schlitten 2 und dem Endeffektor 15 geschaffen werden. Diese können dann Bestandteil der Meßvorrichtung sein und als hochgenaue Luftlager ausgeführt sein.

Als Fluchtungsmeßgerät ist im Beispiel ein Laser- Fluchtungsmeßgerät 5 beschrieben, mit dem ein besonders kompakter Aufbau sowie eine hohe Meßgenauigkeit erreichbar ist. Sind die äußeren Kräfte vernachlässigbar klein, kann in nicht gezeigter Weise das Fluchtungsmeßgerät 5 auch weggelassen werden. Weiterhin kann zur Messung der Querabweichung Y,Z auch ein anderes optisches oder auch ein mechanisches Fluchtungsmeßgerät, wie beispielsweise ein Kollimatorsystem oder ein nach der Drahtmethode arbeitendes System eingesetzt werden.

Durch die beschriebenen Maßnahmen wird eine äußerst stabile und hochgenau messende sowie transportable Meßvorrichtung zur Prüfung und Kalibrierung von Maschinen, insbesondere von Industrierobotern oder Meßmaschinen geschaffen. Zur Prüfung wird das zu prüfende Maschinenteil 15 mit dem Schlitten 2 verbunden und der Schlitten 2 über den Antrieb 3 computergesteuert in vorgegebene Positionen entlang der Linearführung 1 positioniert. Eine vorgegebene Position kann dadurch hochgenau mehrmals reproduzierbar angefahren werden, wodurch eine automatisierte Prüfung der Positionier- und Bahngenauigkeit, insbesondere der Wiederholgenauigkeit der zu prüfenden Maschine bei einer konstanten Orientierung möglich ist. Die erforderlichen Bewegungen können programmgesteuert auch mit unterschiedlichen Geschwindigkeiten und Beschleunigungen erfolgen, so daß in der Gesamtheit statische und dynamische Tests automatisiert ablaufen können.

Zur Kalibrierung und Meßwertauswertung sind die Wegmeßsysteme 4 und 5 der Meßvorrichtung sowie die Wegmeßsysteme der zu prüfenden Maschine gemeinsam an einer Auswerteeinheit, insbesondere einem Computer 17 (Figur 4) angeschlossen. Die Momentanmeßwerte aller Wegmeßsysteme werden zum gleichen Zeitpunkt vom Computer17 übernommen und nach entsprechender Koordinatentransformation miteinander verglichen. Diese Auswertung ist an sich bekannt und wird daher nicht näher beschrieben.

Die in der vorhergehenden Beschreibung als Bessel-Punkte P1, P2 bezeichneten Bereiche werden in der Fachwelt auch als Besselsche Punkte bezeichnet. Sie definieren die Bereiche eines Lineals der Länge l, an denen es zu unterstützen ist, um die Durchbiegung infolge seines Gewichtes zu minimieren. Die Besselschen Punkte P1, P2 sind von den Enden eines Lineals - im Beispiel von den Enden der Linearführung 1 - etwa 0,21 bis 0,23 der Gesamtlänge l entfernt.

## Patentansprüche

1. Meßvorrichtung zum Messen der Positionier- und Bahngenauigkeit eines entlang einer vorgegebenen linearen Bahn (X) bewegten Maschinenteils (15) einer Maschine mit
- einer Längenmeßeinrichtung (4) zur Messung der Position des Maschinenteils (15) entlang der linearen Bahn (X), wobei
- die lineare Bahn (X) durch eine Linearführung (1) der Meßvorrichtung gebildet ist, an der ein Schlitten (2) entlang der Bahn (X) geführt ist,
- am Schlitten (2) eine Komponente (4.2) der Längenmeßeinrichtung (4) befestigt ist,
- ein Antrieb (3) in der Meßvorrichtung integriert ist, mit dem der Schlitten (2) entlang der Linearführung (1) in vorgegebene Positionen und vorgegebenen Geschwindigkeiten gesteuert verfahrbar ist, **dadurch gekennzeichnet, daß**
- das Maschinenteil (15) in den Freiheitsgraden, in denen es an der Maschine bewegbar ist, starr mit dem Schlitten (2) gekoppelt ist und zur Kopplung in den übrigen Freiheitsgraden Führungen bzw. Gelenke zwischen dem Schlitten (2) und dem Maschinenteil (15) angeordnet sind.

2. Meßvorrichtung nach Anspruch 1, **dadurch gekennzeichnet, daß** am Schlitten (2) weiterhin eine Komponente 85.2) eines Fluchtungsmeßgerätes (5) befestigt ist, mit dem Abweichungen (Y,Z) des Maschinenteils (15) quer zur vorgegebenen linearen Bahn (X) gemessen werden.

3. Meßvorrichtung nach Anspruch 2, **dadurch gekennzeichnet, daß** das Fluchtungsmeßgerät ein Laser-Fluchtungsmeßgerät (5) mit den Komponenten Laser (5.1) sowie positionsempfindlichen Detektor (5.2) ist, wobei eine der Komponenten (5.2) am Schlitten (2) befestigt ist und die weitere Komponente (5.1) stationär an einem Halter (12) befestigt ist, wobei der Halter (12) keine starre Verbindung zur Linearführung (1) aufweist.

4. Meßvorrichtung nach einem der vorhergehenden Ansprüche, **dadurch gekennzeichnet, daß** die Längenmeßeinrichtung ein Laserinterferometer (4) ist.

5. Meßvorrichtung nach Anspruch 3 und 4, **dadurch gekennzeichnet, daß** der Meßkopf (4.1) des Laserinterferometers (4) an dem Halter (12) befestigt ist und der Reflektor (4.2) des Laserinterferometers (4) am Schlitten (2) befestigt ist.

6. Meßvorrichtung nach einem der Ansprüche 1 bis 3, **dadurch gekennzeichnet, daß** die Längenmeßeinrichtung einen Maßstab aufweist, der an der Linearführung befestigt ist und der von einem Abtastkopf abgetastet wird, der am Schlitten befestigt ist.

7. Meßvorrichtung nach einem der vorhergehenden Ansprüche, **dadurch gekennzeichnet, daß** der Antrieb (3) auf einem Träger (6) befestigt ist, der ausschließlich an den Bessel-Punkten (P1, P2) der Linearführung (1) unterstützt ist.

8. Meßvorrichtung nach Anspruch 7, **dadurch gekennzeichnet, daß** an einem der Bessel-Punkte (P1) der Träger (6) starr mit der Linearführung (1) verbunden ist, und daß am anderen Bessel-Punkt (P2) zwischen dem Träger (6) und der Linearführung (1) ein in Längsrichtung (X) der Linearführung (1) wirkendes Linearlager vorgesehen ist.

9. Meßvorrichtung nach einem der vorhergehenden Ansprüche, **dadurch gekennzeichnet, daß** an der Linearführung (1) Montageelemente (7, 8) befestigt sind, wobei die Montageelemente (7, 8) die Linearführung (1) an den Bessel-Punkten (P1, P2) unterstützen und ein Montageelement (7) eine in Längsrichtung (X) starr wirkende Verbindung mit der Linearführung (1) aufweist und das weitere Montageelement (8) ein in Längsrichtung (X) wirkendes Linearlager (8.11, 8.21) aufweist.

10. Meßvorrichtung nach Anspruch 9, **dadurch gekennzeichnet, daß** beide Montageelemente (7, 8) ein Drehlager (7.3, 8.3) mit Drehachsen (D1, D2) quer zur Längsrichtung (X) aufweisen, und daß an den Montageelementen (7, 8) Unterstützungsteile (9, 10; 11) befestigt sind, wobei die Linearführung (1) gegenüber den Unterstützungsteilen (9, 10; 11) um die Drehachsen (D1, D2) schwenkbar ist.

## Claims

1. Measuring device for measuring the positioning and path accuracy of a machine part (15), moved along a preset linear path (X), of a machine, having
- a length measuring device (4) for measuring the position of the machine part (15) along the linear path (X), wherein
- the linear path (X) is formed by a linear guide (1) of the measuring device, on which a slide (2) is guided along the path (X),
- a component (4.2) of the length measuring device is secured to the slide (2),
- a drive mechanism (3) is integrated in the measuring device, the slide (2) being capable of being moved in a controlled manner by means of said drive mechanism along the linear guide (1) into preset positions and at preset speeds, **characterised in that**
- the machine part (15) is rigidly coupled with the slide (2) in the degrees of freedom in which it can be moved on the machine, and for coupling in the remaining degrees of freedom, guides or links are disposed between the slide (2) and the machine part (15).

2. Measuring device according to claim 1, **characterised in that** there is also secured to the slide (2) a component (5.2) of an alignment measuring apparatus (5) by means of which deviations (Y,Z) of the machine part (15) transversely with respect to the preset linear path (X) are measured.

3. Measuring device according to claim 2, **characterised in that** the alignment measuring apparatus is a laser alignment measuring apparatus (5) with the components laser (5.1) and position-sensitive detector (5.2), one of the components (5.2) being secured to the slide (2) and the other component (5.1) being secured in a stationary manner to a holder (12), the holder (12) not having any rigid connection to the linear guide (1).

4. Measuring device according to one of the preceding claims,
**characterised in that** the length measuring device is a laser interferometer (4).

5. Measuring device according to claims 3 and 4, **characterised in that** the measuring head (4.1) of the laser interferometer (4) is secured to the holder (12) and the reflector (4.2) of the laser interferometer (4) is secured to the slide (2).

6. Measuring device according to one of claims 1 to 3, **characterised in that** the length measuring device has a scale which is secured to the linear guide and which is scanned by a scanning head which is secured to the slide.

7. Measuring device according to one of the preceding claims, **characterised in that** the drive mechanism (3) is secured to a carrier (6) which is supported exclusively at the Bessel points (P1, P2) of the linear guide (1).

8. Measuring device according to claim 7, **characterised in that** that at one of the Bessel points (P1), the carrier (6) is rigidly connected to the linear guide and **in that** at the other Bessel point (P2) a linear bearing acting in the longitudinal direction (X) of the linear guide (1) is provided between the carrier (6) and the linear guide (1).

9. Measuring device according to one of the preceding claims, **characterised in that** mounting elements (7, 8) are secured to the linear guide (1), said mounting elements (7, 8) supporting the linear guide (1) at the Bessel points (P1, P2) and one mounting element (7) having a connection to the linear guide (I) which has a rigidifying effect in the longitudinal direction (X) and the other mounting element (8) having a linear bearing (8.11, 8.21) acting in the longitudinal direction (X).

10. Measuring device according to claim 9, **characterised in that** both mounting elements (7, 8) have a pivot bearing (7.3, 8.3) with rotational axes (D1, D2) which are transverse with respect to the longitudinal direction (X), and **in that** supporting pieces (9, 10; 11) are secured to the mounting elements (7, 8), the linear guide (1) being pivotable about the rotational axes (D1, D2) in relation to the supporting pieces (9, 10; 11).

## Revendications

1. Dispositif de mesure pour mesurer la précision de positionnement et de trajectoire d'un élément (15) d'une machine déplacé suivant une trajectoire linéaire (X) prédéterminée, comportant
• un dispositif de mesure de longueur (4) pour mesurer la position de l'élément de machine (15) le long de la trajectoire linéaire (X),
• ladite trajectoire linéaire (X) étant formée par une glissière linéaire (1) du dispositif de mesure, sur laquelle un chariot (2) est guidé le long de la trajectoire (X),
• un composant (4.2) du dispositif de mesure de longueurs (4) étant fixé au chariot (2)
• un moyen d'entraînement (3) étant intégré dans le dispositif de mesure, moyen à l'aide duquel le chariot (2) peut être déplacé de manière contrôlée le long de la glissière linéaire (1), dans des positions déterminées et avec des vitesses déterminées,
**caractérisé en ce que**
• l'élément de machine (15), dans les degrés de liberté dans lesquels il peut se déplacer sur la machine, est couplé rigidement au chariot (2), et **en ce que**, pour le couplage dans les autres degrés de liberté, des glissières ou des articulations sont disposées entre le chariot (2) et l'élément de machine (15)

2. Dispositif de mesure selon la revendication 1, **caractérisé en ce que** sur le chariot (2) est en outre fixé un composant (5.2) d'un appareil de mesure d'alignement (5), à l'aide duquel les écarts (Y, Z) de l'élément de machine (15) transversalement à la trajectoire linéaire (X) prédéfinie sont mesurés.

3. Dispositif de mesure selon la revendication 2, **caractérisé en ce que** l'appareil de mesure d'alignement est un appareil de mesure d'alignement à laser (5) avec les composants laser (5.1) et détecteur (5.2) sensible à la position, l'un (5.2) des composants étant fixé au chariot (2) et l'autre composant (5.1) étant fixé de manière stationnaire sur un support (12), le support (12) ne comportant pas de liaison rigide avec la glissière linéaire (1).

4. Dispositif de mesure selon une des revendications précédentes, **caractérisé en ce que** le dispositif de mesure de longueurs est un interféromètre à laser (4).

5. Dispositif de mesure selon les revendications 3 et 4, **caractérisé en ce que** la tête de mesure (4.1) de l'interféromètre à laser (4) est fixée sur le support (12) et le réflecteur (4.2) de l'interféromètre à laser (4) est fixé au chariot (2).

6. Dispositif de mesure selon une des revendications 1 à 3, **caractérisé en ce que** le dispositif de mesure de longueurs comporte une règle graduée qui est fixée à la glissière linéaire et est palpée par une tête de palpage fixée au chariot.

7. Dispositif de mesure selon une des revendications précédentes, **caractérisé en ce que** le moyen d'entraînement (3) est fixé sur un support (6) qui n'est soutenu qu'au niveau des points Bessel (P1, P2) de la glissière linéaire (1).

8. Dispositif de mesure selon la revendication 7, **caractérisé en ce qu'**au niveau de l'un des points Bessel (P1), le support (6) est lié rigidement à la glissière linéaire (1) et **en ce qu'**au niveau de l'autre point Bessel (P2), un palier linéaire qui agit dans la direction longitudinale (X) de la glissière linéaire (1) est prévu entre le support (6) et ladite glissière linéaire (1).

9. Dispositif de mesure selon une des revendications précédentes, **caractérisé en ce que** des éléments de montage (7, 8) sont fixés à la glissière linéaire (1), lesdits éléments de montage (7, 8) supportant la glissière linéaire (1) au niveau des points Bessel (P1, P2), un élément de montage (7) présentant une liaison rigide dans la direction longitudinale (X) avec la glissière linéaire (1) et l'autre élément de montage (8) présentant un palier linéaire (8.11, 8.21) qui agit dans la direction longitudinale (X).

10. Dispositif de mesure selon la revendication 9, **caractérisé en ce que** les deux éléments de montage (7, 8) présentent un palier tournant (7.3, 8.3) avec des axes de rotation (D1, D2) orientés transversalement à la direction longitudinale (X) et **en ce que** des éléments de support (9, 10 ; 11) sont fixés au éléments de montage (7, 8), la glissière linéaire (1) pouvant pivoter autour des axes de rotation (D1, D2) par rapport aux éléments de support (9, 10 ; 11).
